# EUROPÄISCHE PATENTSCHRIFT

(11) **EP 2 362 137 B1**
(45) Veröffentlichungstag und Bekanntmachung des Hinweises auf die Patenterteilung: **27.05.2015**
(21) Anmeldenummer: 11000295.3
(22) Anmeldetag: 15.01.2011
(51) Int. Cl.: B60Q 1/00, B60Q 1/22, B60Q 1/24, B60Q 1/48, F21S 8/10, F21Y 101/02

(54) **Beleuchtungseinrichtung für ein Kraftfahrzeug**
Lighting device for a motor vehicle
Dispositif d'éclairage pour un véhicule automobile

(30) Priorität: 25.02.2010 DE 202010002800 U
(43) Veröffentlichungstag der Anmeldung: 31.08.2011
(73) Patentinhaber: Automotive Lighting Reutlingen GmbH, 72762 Reutlingen (DE)
(72) Erfinder: Buchberger, Christian, Dr., 72770 Reutlingen (DE); Hossfeld, Wolfgang, Dr., 72810 Gomaringen (DE)
(74) Vertreter: DREISS Patentanwälte PartG mbB

(56) Entgegenhaltungen:
- DE-A1- 3 724 943
- DE-A1-102005 042 574
- FR-A- 629 530
- GB-A- 2 248 293
- US-A- 1 557 232
- US-A- 4 727 458
- ANONYMOUS: "Tail lamp with integral blindzone radar", RESEARCH DISCLOSURE, MASON PUBLICATIONS, HAMPSHIRE, GB, vol. 350, no. 74, 1 June 1993 (1993-06-01) , XP007119140, ISSN: 0374-4353

## Beschreibung

### Beschreibung

Die vorliegende Erfindung betrifft eine Beleuchtungseinrichtung für ein Kraftfahrzeug, wobei die Beleuchtungseinrichtung ein Lichtmodul mit mindestens einer Hauptlichtquelle zur Erzeugung einer Hauptlichtverteilung aufweist.

Eine derartige Beleuchtungseinrichtung ist bspw. aus der DE 36 35 473 A1oder DE 37.24.943 bekannt. Die Druckschrift DE 36 35 473 A1 beschreibt eine Einparkleuchte, die an einem Fahrzeugaußenspiegel angeordnet ist, durch Einlegen des Rückwärtsgangs eingeschaltet wird und einen Bereich seitlich hinter dem Fahrzeug ausleuchtet.

Park- und Manöviersituationen bei nächtlicher Dunkelheit oder schlechter Sicht erfordern, dass der Rangierbereich im Nahfeld vor und hinter dem Fahrzeug möglichst gut beleuchtet ist. Auch wenn dieser Bereich von der Position des Fahrers des Fahrzeugs aus nicht direkt oder mittels Spiegel einsehbar ist, so ist eine hinreichende Ausleuchtung des Nahfeldbereichs dennoch für den Einsatz von Sensoren, insbesondere von optischen Sensoren, und Kameras von besonderer Bedeutung.

Der vorliegenden Erfindung liegt daher die Aufgabe zugrunde, auf möglichst einfache und kostengünstige Weise das unmittelbare Umfeld vor dem Fahrzeug zu beleuchten. Zur Lösung dieser Aufgabe wird eine Anordnung gemäß Anspruch 1 vorgeschlagen. Die jeweilige Kernfunktion des Lichtmoduls, wie Abblendlicht, Fernlicht, Kurvenlicht, wird durch die zusätzliche Lichtquelle nicht oder zumindest nicht merklich eingeschränkt. Das heißt, die ursprüngliche Hauptlichtverteilung der jeweiligen Kernfunktion bleibt durch die mindestens eine zusätzliche Lichtquelle im Wesentlichen unbeeinflusst.

Gemäß einer besonders bevorzugten Ausführungsform der vorliegenden Erfindung ist das Lichtmodul als ein Projektionsmodul ausgebildet. Indem bekannte Projektionsmodule um eine oder mehrere zusätzliche Lichtquellen ergänzt werden, bleibt die Kompatibilität des Lichtmoduls bezüglich Gehäuse und Kraftfahrzeug gewahrt. Durch die Linse des Projektionsmoduls kann das Licht der mindestens einen zusätzlichen Lichtquelle in das Nahfeld insbesondere vor oder hinter das Fahrzeug projiziert werden.

Bei einer weiteren Ausgestaltungsform der Erfindung ist vorgesehen, dass die mindestens eine zusätzliche Lichtquelle im Lichtmodul oberhalb einer durch eine optische Achse des Lichtmoduls verlaufenden Horizontalebene angeordnet ist. Die Anordnung der zusätzlichen Lichtquelle oberhalb der durch die optische Achse verlaufenden Horizontalebene des Lichtmoduls, insbesondere eines Projektionsmoduls, und damit außerhalb des Brennpunkts des Strahlengangs der Kernfunktion ermöglicht es, Licht direkt in Richtung der Projektionslinse zu emittieren, wobei der Strahlengang der Kernfunktion nicht oder nur geringfügig beeinflusst wird. Das auf die Projektionslinse des Projektionsmoduls auftreffende Licht wird von der Projektionslinse nach unten abgelenkt und auf einen Nahfeldbereich in unmittelbarer Umgebung des Fahrzeugs projiziert. Diese Anordnung der mindestens einen zusätzlichen Lichtquelle ermöglicht es zudem, ein Projektionsmodul für Abblend- und Fernlicht zu verwenden, das eine mechanische Blende aufweist, ohne dass durch die Blende das von der zusätzlichen Lichtquelle emittierte Licht beeinträchtigt wird.

Des weiteren kann vorgesehen sein, dass die mindestens eine zusätzliche Lichtquelle im Lichtmodul versetzt zu einer durch die optische Achse des Lichtmoduls verlaufenden Vertikalebene angeordnet ist. Dadurch wird nicht nur der Nahfeldbereich vor bzw. hinter der Beleuchtungseinrichtung, sondern auch der Nahfeldbereich seitlich hierzu ausgeleuchtet.

Insbesondere kann vorgesehen sein, dass die mindestens eine zusätzliche Lichtquelle im Lichtmodul um eine zu der Horizontalebene orthogonal verlaufende Achse und/oder um eine zu der Vertikalebene orthogonal verlaufende Achse gedreht angeordnet ist. In einem Projektionsmodul verläuft der Strahlengang der mindestens einen zusätzlichen Lichtquelle somit schräg in Richtung der Projektionslinse durch den Reflektor und wird von der Projektionslinse vor und seitlich vor das Fahrzeug projiziert. Dies hat den Vorteil, dass bei Park- und Manövriersituationen auch das seitliche Umfeld vor dem Fahrzeug mit ausgeleuchtet wird.

Gemäß einer vorteilhaften Ausgestaltung der Erfindung wird vorgeschlagen, dass im Lichtmodul mehrere zusätzliche Lichtquellen angeordnet sind, die separat an- und ausschaltbar sind und zumindest teilweise unterschiedliche Bereiche im Nahfeld vor oder hinter dem Kraftfahrzeug ausleuchten. Je nach Bedarf können also einzelne Lichtquellen zugeschaltet oder abgeschaltet werden, wodurch sich der ausgeleuchtete Nahfeldbereich vergrößert oder verkleinert.

Weiterhin ist vorteilhaft, dass die Hauptlichtquelle und/oder die mindestens eine zusätzliche Lichtquelle als Halbleiterlichtquelle, insbesondere als Leuchtdiode, ausgebildet ist. Leuchtdioden zeichnen sich durch einen hohen Wirkungsgrad und eine lange Lebensdauer aus.

Ferner ist vorteilhaft, dass die mindestens eine zusätzliche Lichtquelle im Inneren eines Reflektors des Lichtmoduls angeordnet ist. Dies ermöglicht eine einfache und flexible Befestigung der Lichtquelle.

Vorzugsweise leuchtet die Nahfeldbeleuchtung einen Bereich unmittelbar vor dem Fahrzeug zumindest teilweise aus, den die Hauptlichtverteilung gar nicht oder nicht vollständig ausleuchtet. Dadurch werden für den Fahrer des Fahrzeugs auch solche Bereiche beleuchtet, die er nicht direkt oder über Spiegel einsehen kann. Insbesondere ist es vorstellbar, dass der Fahrer durch optische Sensoren oder durch ein Kamerasystem, das den beleuchteten Bereich aufnimmt, bei Park- und Manövriersituationen unterstützt wird.

Es erweist sich als vorteilhaft, wenn die Nahfeldbeleuchtung insbesondere einen Bereich zwischen 0,2 m und 2,5 m, vor dem Fahrzeug ausleuchtet. Dadurch kann auch der Nahfeldbereich des Fahrzeugumfelds beim Einparken oder Manövrieren vom Fahrer bei Licht eingesehen beziehungsweise von optischen Sensoren oder Kamerasystemen erfasst werden. Ausführungsbeispiele der vorliegenden Erfindung werden nachfolgend anhand der Figuren näher erläutert. Es zeigen:
- Figur 1: eine erfindungsgemäße Beleuchtungseinrichtung gemäß einer ersten Ausführungsform als schematische Darstellung in einer Seitenansicht;
- Figur 2: einen Reflektor einer Beleuchtungseinrichtung gemäß einer weiteren Ausführungsform als schematische Darstellung in einer Ansicht entgegen der Lichtaustrittsrichtung und
- Figur 3: einen Ausschnitt einer erfindungsgemäßen Beleuchtungseinrichtung gemäß noch einer weiteren Ausführungsform als schematische Darstellung in einer perspektivischen Ansicht.

Vorab ist anzumerken, dass funktionsäquivalente Teile in allen Figuren der Zeichnung jeweils mit den gleichen Ziffern bezeichnet und nicht jedes Mal erneut beschrieben sind.

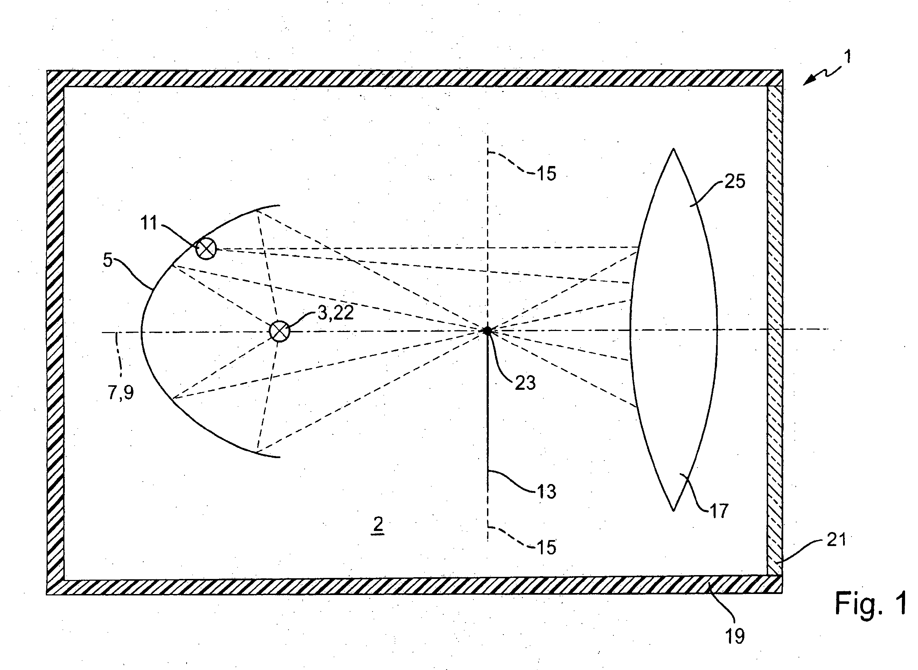

Figur 1 zeigt eine erste Ausführungsform einer erfindungsgemäßen Beleuchtungseinrichtung 1, die hier als ein Scheinwerfer ausgebildet ist. Die Beleuchtungseinrichtung 1 umfasst ein Gehäuse 19, das vorzugsweise aus Kunststoff besteht. Eine vordere Lichtaustrittsöffnung des Gehäuses ist durch eine transparente Abdeckscheibe 21 verschlossen. Die Abdeckscheibe 21 kann mit oder ohne optisch wirksamen Elementen, bspw. Prismen, ausgebildet sein. Im Inneren des Scheinwerfergehäuses 19 ist ein Lichtmodul 2 angeordnet, das als ein Projektionsmodul ausgebildet ist.

Das Lichtmodul 2 umfasst eine Hauptlichtquelle 3 zum Aussenden von Licht für eine Hauptlichtverteilung der Beleuchtungseinrichtung 1. Die Lichtquelle 3 ist vorzugsweise auf oder in der Nähe einer optischen Achse 9 des Moduls 2 in einem ersten Brennpunkt 22 oder in der Nähe des Brennpunkts 22 angeordnet. Das Lichtmodul 2 umfasst außerdem einen Reflektor 5, der ellipsoidförmig oder als ein Freiformreflektor mit einer ellipsoidförmigen Grundform ausgebildet ist. Oberhalb einer sich entlang der optischen Achse 9 erstreckenden Horizontalebene 7 ist am Reflektor 5 eine zusätzliche Lichtquelle 11 angeordnet. Die zusätzliche Lichtquelle 11 kann sich auf einer Vertikalebene befinden, die ebenfalls durch die optische Achse 9 verläuft. Die Hauptlichtquelle 3 und die zusätzliche Lichtquelle 11 sind vorzugsweise als Leuchtdioden (LED) ausgebildet.

In Lichtaustrittsrichtung nach dem Reflektor 5 ist eine Blendenanordnung 13 angeordnet. Die Blende 13 ist vorzugsweise in einer Brennebene 15 einer Projektionslinse 17 und zugleich in einem zweiten Brennpunkt 23 des Reflektors 5 oder zumindest in der Nähe der Brennebene 15 und des Brennpunkts 23 angeordnet. Die Blende 13 umfasst eine Oberkante mit einem in der Brennebene 15 betrachtet asymmetrischen oder, beispielsweise bei Nebelscheinwerfern, horizontalen Verlauf. Bei einem asymmetrischen Verlauf sind Abschnitte der Oberkante auf unterschiedlichen Seiten der durch die optische Achse 9 verlaufenden Vertikalebene unterschiedlich hoch angeordnet. Der Übergang zwischen den beiden Abschnitten kann beispielsweise durch einen 15°-Anstieg, einen 45°-Anstieg oder durch eine Stufe realisiert sein. Die Oberkante der Blende 13 wird durch die Projektionslinse 17 als eine asymmetrische Hell/Dunkel-Grenze auf die Fahrbahn vor das Kraftfahrzeug projiziert. Bei einem horizontalen Verlauf der Oberkante der Blende 13 wird eine horizontale Hell/Dunkel-Grenze auf die Fahrbahn vor das Kraftfahrzeug projiziert.

Zumindest die Oberkante der Blende 13 kann zur Variation der Lichtverteilung variabel ausgebildet sein. Beispielsweise ist es denkbar, dass die Blende 13 um eine im Wesentlichen horizontal und in einem Abstand und quer zur optischen Achse 9 verlaufende Kippachse klappbar ist. Denkbar ist auch, dass die Blendenanordnung 13 mehrere im Wesentlichen ebene und dicht hintereinander angeordnete Blendenelemente mit unterschiedlichen Oberkantenverläufen aufweist. Die optisch wirksame Oberkante der Blende 13 wird durch eine Überlagerung der Oberkanten der einzelnen Blendenelemente gebildet. Durch Bewegen der einzelnen Blendenelemente relativ zueinander kann der Verlauf der resultierenden Oberkante der Blende 13 geändert werden. Durch Bewegen der Blende 13 beziehungsweise der bewegbaren Blendenelemente kann die Lichtverteilung des Projektionsmoduls 2 variiert werden, insbesondere die Hell-/ Dunkel-Grenze angehoben oder abgesenkt werden. Dadurch lässt sich die Lichtverteilung beispielsweise zwischen Abblendlicht und Fernlicht umschalten oder eine adaptive Lichtverteilung realisieren.

Nach der Blende 13 ist in Lichtaustrittsrichtung die Projektionslinse 17 angeordnet. Auf die Projektionslinse 17 trifft das von der Hauptlichtquelle 3 und der zusätzlichen Lichtquelle 11 emittierte und an der Blende 13 vorbei gelangte Licht.

Das von der Hauptlichtquelle 3 abgestrahlte Licht wird, je nach Stellung der Blende 13, zur Erzielung der gewünschten Hauptlichtverteilung von der Projektionslinse 17 durch die Abdeckscheibe 21 auf die Fahrbahn vor das Fahrzeug projiziert. Dabei bleibt jedoch der an das Fahrzeug angrenzende Nahfeldbereich, der sich typischerweise in einem Abstand von etwa 0 m bis 2,5 m vor dem Fahrzeug erstreckt, im Wesentlichen unbeleuchtet, zumindest wird er jedoch durch die Hauptfunktionen der Beleuchtungseinrichtung nicht ausreichend ausgeleuchtet. So trifft ein Abblendlicht üblicherweise überhaupt erst bei rund 2,4 m auf die Fahrbahn. Auch Nebellicht oder ein (statisches) Kurvenlicht erfassen den Nahfeldbereich des Fahrzeugs nicht. Selbst durch Ausnutzen von dynamischen Verstellbereichen, zum Beispiel einer Leuchtweitenregelung, wird die Ausleuchtung des Nahfeldbereichs nur geringfügig verbessert. Hier schafft die vorliegende Erfindung Abhilfe.

Um eine Ausleuchtung des Nahfeldbereichs des Fahrzeugs zu erzielen, trifft das von der automatisch oder manuell aktivierbaren zusätzlichen Lichtquelle 11 abgestrahlte Licht auf die Projektionslinse 17, die das Licht zur Ausleuchtung des Nahbereichs vor dem Fahrzeug auf die Fahrbahn projiziert. Selbstverständlich ist es denkbar, dass ein Teil des von der Lichtquelle 11 ausgesandten Lichts nicht in den Nahbereich, sondern in den von der Hauptlichtverteilung ausgeleuchteten Bereich oder einen anderen Bereich trifft. Allerdings wird durch die zusätzliche Lichtquelle 11 der Nahbereich deutlich besser ausgeleuchtet als ohne. Vorzugsweise trifft das Licht der Lichtquelle 11 direkt, das heißt ohne Durchlaufen des zweiten Brennpunkts 23, auf eine obere Hälfte 25 der Projektionslinse 17.

Die Ausleuchtung des Nahfeldbereichs des Fahrzeugs hilft besonders bei Einparkmanövern bei Dunkelheit oder schlechter Sicht: Sie ermöglicht den Einsatz von Sensoren, insbesondere optischen Sensoren, und von Kameras auch bei Dunkelheit und schlechter Sicht. Derartige Sensoren dienen häufig als Einparkhilfe und erfüllen die Funktion eines Abstandswarners. Wenn sie mit einer automatischen Einparkfunktion gekoppelt sind, wird durch die vorliegende Erfindung das automatische sensorgesteuerte Einparken bei schlechter Sicht überhaupt erst möglich. Dabei können auch Kamerasysteme, die beispielsweise ohnehin für andere Funktionen oftmals im Fahrzeug verbaut sind, als Einparkhilfe genutzt werden und die sonst übliche zusätzliche Ultraschall- oder Radar-Sensorik ersetzen. Insbesondere können durch die Kamerasysteme Perspektiven aus Positionen erfasst werden, die von einem Fahrer nicht mehr direkt oder über Spiegel eingesehen werden können, wobei die aufgenommenen Daten ausgewertet und als Schema, Grafik oder fotorealistische Szene auf einem Display im Fahrzeug dargestellt werden.

In Abweichung zu dem in Figur 1 dargestellten Ausführungsbeispiel ist es denkbar, dass mehr als eine zusätzliche Lichtquelle 11 vorgesehen ist. Die mindestens eine zusätzliche Lichtquelle 11 kann auch versetzt zu der Vertikalebene angeordnet sein. Außerdem ist es denkbar, dass die mindestens einen zusätzliche Lichtquelle 11 unterhalb oder auf der Horizontalebene 7 angeordnet ist. Die mindestens eine Hauptlichtquelle 3 und/oder die mindestens eine zusätzliche Lichtquelle 11 kann als eine herkömmliche Glühbirne, als eine Gasentladungslampe oder als eine beliebig andere Lichtquelle ausgestaltet sein. Das Lichtmodul 2 könnte statt als Projektionsmodul auch als Reflexionsmodul ausgestaltet sein. In dem Scheinwerfergehäuse 19 kann das Lichtmodul 2 alleine oder zusammen mit weiteren Lichtmodulen zur Erzeugung beliebiger Lichtverteilungen angeordnet sein.

Die erfindungsgemäße Beleuchtungseinrichtung 1 mit der mindestens einen in das Lichtmodul 2 integrierten zusätzlichen Lichtquelle 11 kann nicht nur den Nahbereich direkt vor dem Fahrzeug ausleuchten. Es ist auch denkbar, dass die mindestens eine zusätzliche Lichtquelle 11 so in dem Lichtmodul 2 angeordnet ist, dass das von diesem ausgesandte Licht nach schräg vorne oder schräg hinten seitlich neben das Fahrzeug projiziert wird. Dies ist bspw. besonders interessant für Fahrzeuge, die im vorderen oder hinteren Bereich seitlich ausgerichtete optische Sensoren zum Erfassen des seitlichen Bereichs neben dem Fahrzeug, bspw. beim Einbiegen aus einer Ausfahrt auf eine Straße, aufweisen. Dadurch können selbst in unübersichtlichen Ausfahrten Fußgänger oder Radfahrer frühzeitig erkannt werden.

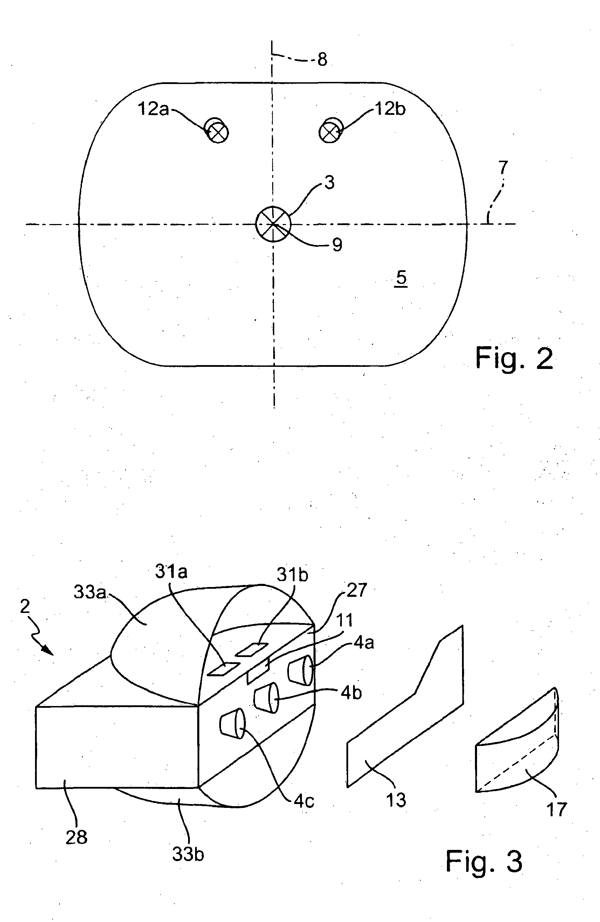

Figur 2 zeigt eine zweite Ausführungsform der erfindungsgemäßen Beleuchtungseinrichtung 1. Dargestellt ist eine schematische Vorderansicht des Reflektors 5 mit einer Hauptlichtquelle 3 und zwei zusätzlichen Lichtquellen 12a und 12b entgegen der Lichtaustrittsrichtung. Die Hauptlichtquelle 3 ist im Wesentlichen zentral im ersten Brennpunkt 22 des Reflektors 5 angeordnet. Die zusätzlichen Lichtquellen 12a und 12b sind oberhalb der durch die optische Achse 9 verlaufenden Horizontalebene 7 und seitlich versetzt zu einer ebenfalls durch die optische Achse 9 verlaufenden Vertikalebene 8 angeordnet. Darüber hinaus sind die beiden zusätzlichen Lichtquellen 12a und 12b jeweils vorzugsweise um eine zur Horizontalebene 7 rechtwinklig verlaufende Achse gedreht angeordnet, wobei sie in Lichtaustrittsrichtung (der Hauptlichtquelle 3) zur Vertikalebene 8 hin verschwenkt sind. Des weiteren ist vorstellbar, dass die beiden zusätzlichen Lichtquellen 12a und 12b um eine horizontale Achse leicht nach unten in

Richtung der Horizontalebene 7 geneigt sind. Durch die versetzt zur Vertikalebene 8 und schräg angeordneten zusätzlichen Lichtquellen 12a und 12b wird nicht nur ein Fahrbahnbereich unmittelbar vor dem Kraftfahrzeug ausgeleuchtet, sondern auch der Straßenbereich seitlich vor oder hinter dem Kraftfahrzeug. Eine Ausleuchtung des seitlichen Nahbereichs vor dem Fahrzeug kann auch alleine durch eine Anordnung der Lichtquellen 12a, 12b versetzt zur Vertikalebene 8 oder auf andere Weise erzielt bzw. verbessert werden.

Die zusätzlichen Lichtquellen 12a und 12b müssen nicht unmittelbar am Reflektor 5 angeordnet und befestigt sein. Es ist vielmehr denkbar, dass eine oder mehrere zusätzliche Lichtquellen 12a, 12b zwischen dem Reflektor 5 und der Brennebene 15 (vgl. Figur 1), in der Brennebene 15, oder zwischen der Brennebene 15 und der Projektionslinse 17 der Beleuchtungseinrichtung 1 angeordnet sind. Denkbar wäre bspw. eine Befestigung der zusätzlichen Lichtquellen 11; 12a, 12b an dem Scheinwerfergehäuse 19 oder einem im Gehäuse 19 angeordneten Blendenelement, Sichtschutz- oder Abdeckrahmen. Durch gezieltes Anordnen der zusätzlichen Lichtquellen 11; 12a, 12b relativ zum übrigen Lichtmodul 2 kann Richtung und Ausdehnung der von der Projektionslinse 17 auf die Straße projizierten zusätzlichen Lichtverteilung vorgegeben werden. Insbesondere kann dadurch auch der Nahfeldbereich seitlich vor dem Fahrzeug beleuchtet werden.

Figur 3 zeigt eine dritte Ausführungsform der erfindungsgemäßen Beleuchtungseinrichtung 1. Dargestellt ist eine schematische perspektivische Ansicht auf ein als LED-Modul ausgebildetes Lichtmodul 2 eines Scheinwerfers.

Das LED-Modul 2 umfasst einen Kühlkörper 28, an dessen Vorderseite 27 zur Erzeugung eines Abblendlicht-Spots mehrere Leuchtdioden, insbesondere Hochleistungs-LEDs, als Hauptlichtquellen 4a, 4b und 4c angeordnet sind. Das Licht der Hauptlichtquellen 4a, 4b und 4c wird jeweils durch eine Vorsatzoptik als Primäroptik gebündelt. Die Vorsatzoptik besteht vorzugsweise aus durchsichtigem Kunststoff. Die Bündelung des Lichts durch die Vorsatzoptik erfolgt mittels Totalreflexion. Durch die Freiformgeometrie der Vorsatzoptik wird das gebündelte Licht in Richtung einer als Projektionslinse 17 ausgebildeten Sekundäroptik emittiert. Dabei passiert es die Blende 13, wodurch eine Hell/Dunkel-Grenze der Lichtverteilung auf der Fahrbahn erzeugt wird. Selbstverständlich kann das LED-Modul 2 auch ohne Blende 13 ausgestattet sein. Wenn das LED-Modul 2 ohne Blende 13 ausgestattet ist, sind die Vorsatzoptiken 4a, 4b, 4c so ausgebildet, dass das von ihnen ausgesandte Licht eine asymmetrische horizontale Hell-/Dunkel-Grenze aufweist. Die Projektionslinse 17 projiziert das auftreffende Licht als spotförmige Abblendlichtverteilung auf die Fahrbahn.

An der Oberseite des Lichtmoduls 2 sind weitere Hauptlichtquellen 31a, 31b sowie ein Reflektor33a angeordnet. An der Unterseite des Lichtmoduls 2 können sich ebenfalls mehrere entsprechende Nebenlichtquellen und ein Reflektor33b befinden. Die Reflektoren 33a, 33b sind als Halbschalenreflektoren ausgebildet. Das von den weiteren Hauptlichtquellen 31a, 31b erzeugte Licht wird von den beiden Reflektoren 33a, 33b in Lichtaustrittsrichtung umgelenkt. Die weiteren Hauptlichtquellen 31a, 31b erzeugen eine gestreute Abblendlichtverteilung, welche die Seitenbereiche der Fahrbahn ausleuchtet. Wenn das LED-Modul 2 ohne Blende 13 ausgestattet ist, sind die Reflektoren 33a, 33b so geformt, dass das von ihnen reflektierte Licht eine im Wesentlichen gerade horizontale Hell-/ Dunkelgrenze aufweist.

Um auch den Nahfeldbereich vor dem Fahrzeug auszuleuchten, ist es denkbar, dass an der Vorderseite 27 des Lichtmoduls 2 oder an einer beliebigen anderen Stelle des LED-Moduls 2 mindestens eine zusätzliche Lichtquelle 11 angeordnet ist, die Licht so auf die Projektionslinse 17 abstrahlt, dass dieses unmittelbar in den Nahfeldbereich vor dem Fahrzeug projiziert wird.

Eine vierte nicht dargestellte Ausführungsform sieht vor, dass mindestens eine zusätzliche Lichtquelle in ein Kurvenlichtmodul einer Beleuchtungseinrichtung integriert ist. Dabei entspricht die von der Hauptlichtquelle des Kurvenlichtmoduls erzeugte Hauptlichtverteilung einem dynamischen Kurvenlicht. Durch ein entsprechendes Verschwenken des Lichtmoduls zur Realisierung der dynamischen Kurvenlichtfunktion kann durch das von den zusätzlichen Lichtquellen ausgesandte Licht auch der Nahfeldbereich vorne seitlich zum Fahrzeug beleuchtet werden. Dabei ist die Hauptlichtquelle des Moduls vorzugsweise deaktiviert oder zumindest gedimmt.

Die zusätzlichen Lichtquellen 11, 12a und 12b werden vorzugsweise durch ein Steuergerät überwacht und angesteuert, das sie beispielsweise bei Dunkelheit und Einlegen des Rückwärtsgangs automatisch anschaltet. Es ist denkbar, dass die zusätzlichen Lichtquellen 11, 12a und 12b dann so lange angeschaltet bleiben, bis der Motor des Fahrzeugs abgestellt wird. Bei mehreren zusätzlichen Lichtquellen können diese durch das Steuergerät abhängig vom Lenkwinkel angesteuert werden. Außerdem kann das Steuergerät die zusätzlichen Lichtquellen 11, 12a und 12b entweder kumulativ oder selektiv aktivieren und deaktivieren, insbesondere in Abhängigkeit des Lenkwinkels. Ferner können die zusätzlichen Lichtquellen 11, 12a, 12b je nach Bedarf auch manuell einzeln oder gemeinsam an- und abgeschaltet werden.

Der Einsatzbereich für die Nahfeldbeleuchtung erstreckt sich insbesondere auf Projektionsmodule mit Abblend- und Fernlichtfunktion oder mit Nebel- oder Kurvenlichtfunktion. Die Erfindung ermöglicht durch Beleuchtung des Nahfeldbereichs um das Fahrzeug insbesondere den Einsatz von Sensoren und Kameras, die als Einparkhilfesysteme dem Fahrer wertvolle Informationen über seine aktuelle Park-und Manövriersituation liefern.

## Patentansprüche

1. Anordnung einer Beleuchtungseinrichtung (1) und optischer Sensoren für ein Kraftfahrzeug, wobei die Beleuchtungseinrichtung (1) ein Lichtmodul (2) mit mindestens einer Hauptlichtquelle (3, 4a, 4b, 4c) zur Erzeugung einer Hauptlichtverteilung aufweist, wobei mindestens eine zusätzliche Lichtquelle (11, 12a, 12b) zur Ausleuchtung eines Nahfelds zwischen der Hauptlichtverteilung und dem Kraftfahrzeug in einem Bereich zwischen 0,2 m und 5,0 m Abstand zu dem Kraftfahrzeug in dem Lichtmodul (2) angeordnet ist, wobei das Lichtmodul (2) mit der mindestens einen Hauptlichtquelle (3, 4a, 4b, 4c) zur Erzeugung von Fernlicht, Abblendlicht, Nebellicht, Stadtlicht, Landstraßenlicht, Autobahnlicht oder Kurvenlicht ausgebildet ist und das von der zusätzlichen Lichtquelle (11, 12a, 12b) ausgeleuchtete Nahfeld vor dem Kraftfahrzeug angeordnet ist und von den optischen Sensoren erfasst wird.

2. Anordnung (1) nach Anspruch 1, **dadurch gekennzeichnet, dass** das Lichtmodul (2) als ein Projektionsmodul ausgebildet ist.

3. Anordnung (1) nach Anspruch 1 oder 2, **dadurch gekennzeichnet, dass** die mindestens eine zusätzliche Lichtquelle (11, 12a, 12b) im Lichtmodul (2) oberhalb einer durch eine optische Achse (9) des Lichtmoduls (2) verlaufenden Horizontalebene (7) angeordnet ist.

4. Anordnung (1) nach einem der voranstehenden Ansprüche, **dadurch gekennzeichnet, dass** die mindestens eine zusätzliche Lichtquelle (11, 12a, 12b) im Lichtmodul (2) versetzt zu einer durch eine optische Achse (9) des Lichtmoduls (2) verlaufenden Vertikalebene (8) angeordnet ist.

5. Anordnung (1) nach einem der voranstehenden Ansprüche, **dadurch gekennzeichnet, dass** die mindestens eine zusätzliche Lichtquelle (11, 12a, 12b) im Lichtmodul (2) um eine zu der Horizontalebene (7) orthogonal verlaufende Achse und/oder um eine zu der Vertikalebene (8) orthogonal verlaufende Achse gedreht angeordnet ist.

6. Anordnung (1) nach einem der voranstehenden Ansprüche, **dadurch gekennzeichnet, dass** im Lichtmodul (2) mehrere zusätzliche Lichtquellen (11, 12a, 12b) angeordnet sind, die separat an- und ausschaltbar sind und zumindest teilweise unterschiedliche Bereiche im Nahfeld vor dem Kraftfahrzeug ausleuchten.

7. Anordnung (1) nach einem der voranstehenden Ansprüche, **dadurch gekennzeichnet, dass** die mindestens eine Hauptlichtquelle (3, 4a, 4b, 4c) und/oder die mindestens eine zusätzliche Lichtquelle (11, 12a, 12b) jeweils mindestens eine Halbleiterlichtquelle, insbesondere eine Leuchtdiode, aufweist.

8. Anordnung (1) nach einem der vorstehenden Ansprüche, **dadurch gekennzeichnet, dass** die mindestens eine zusätzliche Lichtquelle im Inneren eines Reflektors (5) des Lichtmoduls (2) angeordnet ist oder in das Innere des Reflektors (5) hineinragt.

9. Anordnung (1) nach einem der voranstehenden Ansprüche, **dadurch gekennzeichnet, dass** die mindestens eine zusätzliche Lichtquelle Licht zur zumindest teilweisen Ausleuchtung eines Bereichs unmittelbar vor oder hinter dem Fahrzeug aussendet, den die Hauptlichtverteilung gar nicht oder nicht vollständig ausleuchtet.

10. Anordnung (1) nach einem der voranstehenden Ansprüche, **dadurch gekennzeichnet, dass** die mindestens eine zusätzliche Lichtquelle Licht zur Ausleuchtung eines Bereichs zwischen 0,2 m und 2,5 m vor dem Fahrzeug aussendet.

## Claims

1. An arrangement of a lighting device (1) and of optical sensors for a motor vehicle, wherein the lighting device (1) has a light module (2) with at least one main light source (3, 4a, 4b, 4c) for generating a primary light distribution, and at least one additional light source (11, 12a, 12b) for illuminating a near field between the primary light distribution and the motor vehicle is located in the light module (2) in a region at a distance of between 0.2 m and 5.0 m from the motor vehicle, wherein the light module (2) with the at least one main light source (3, 4a, 4b, 4c) is embodied for generating high beams, low beams, fog lights, city driving lights, country driving lights, lights for driving on highways, or cornering lights, and the near field illuminated by the additional light source (11, 12a, 12b) is located ahead of the motor vehicle and is detected by the optical sensors.

2. The arrangement of claim 1, **characterized in that** the light module (2) is embodied as a projection module.

3. The arrangement of claim 1 or 2, **characterized in that** the at least one additional light source (11, 12a, 12b) in the light module (2) is located above a horizontal plane (7) extending through an optical axis (9) of the light module (2).

4. The arrangement of one of the foregoing claims, **characterized in that** the at least one additional light source (11, 12a, 12b) is located in the light module (2) offset from a vertical plane (8) extending through an optical axis (9) of the light module (2).

5. The arrangement of one of the foregoing claims, **characterized in that** the at least one additional light source (11, 12a, 12b) in the light module (2) is located in rotated fashion about an axis extending orthogonally to the horizontal plane (7) and/or about an axis extending orthogonally to the vertical plane (8).

6. The arrangement of one of the foregoing claims, **characterized in that** a plurality of additional light sources (11, 12a, 12b) are disposed in the light module (2), which light sources can be switched on and off separately and at least partially illuminate different regions in the near field ahead of the motor vehicle.

7. The arrangement of one of the foregoing claims, **characterized in that** the at least one main light source (3, 4a, 4b, 4c) and/or the at least one additional light source (11, 12a, 12b) each has at least one semiconductor light source, in particular a light-emitting diode.

8. The arrangement of one of the foregoing claims, **characterized in that** the at least one additional light source is located in the interior of a reflector (5) of the light module (2) or protrudes into the interior of the reflector (5).

9. The arrangement of one of the foregoing claims, **characterized in that** the at least one additional light source emits light for at least partial illumination of a region directly ahead of or behind the vehicle, which region does not illuminate the primary light distribution at all, or does not illuminate it completely.

10. The arrangement of one of the foregoing claims, **characterized in that** the at least one additional light source emits light for illuminating a region between 0.2 m and 2.5 m ahead of the vehicle.

## Revendications

1. Agencement d'un dispositif de phare (1) et de capteurs optiques destinés à un véhicule à moteur, dans lequel le dispositif d'éclairage (1) comprend un module de phare (2) comportant au moins une source de lumière principale (3, 4a, 4b, 4c) destinée à générer une distribution de lumière principale, dans lequel au moins une source de lumière supplémentaire (11, 12a, 12b) destinée à éclairer un champ proche est disposée dans le module de phare (2) entre la distribution de lumière principale et le véhicule à moteur à une distance du véhicule à moteur se situant dans une région comprise entre 0,2 m et 5,0 m, dans lequel le module de phare (2) est conçu pour générer des feux de route, des feux de croisement, des feux de brouillard, des feux de ville, des feux extra-urbains, des feux d'autoroute ou des feux de virage au moyen de l'au moins une source de lumière principale (3, 4a, 4b, 4c) et le champ proche éclairé par la source de lumière supplémentaire (11, 12a, 12b) est disposé à l'avant du véhicule à moteur et est détecté par les capteurs optiques.

2. Agencement selon la revendication 1, **caractérisé en ce que** le module de phare (2) est réalisé sous la forme d'un module de projection.

3. Agencement selon la revendication 1 ou 2, **caractérisé en ce que** l'au moins une source de lumière supplémentaire (11, 12a, 12b) est disposée dans le module de phare (2) au-dessus d'un plan horizontal (7) passant par un axe optique (9) du module de phare (2).

4. Agencement selon l'une quelconque des revendications précédentes, **caractérisé en ce que** l'au moins une source de lumière supplémentaire (11, 12a, 12b) est disposée dans le module de phare (2) de manière décalée par rapport à un plan vertical (8) passant par un axe optique (9) du module de phare (2).

5. Agencement selon l'une quelconque des revendications précédentes, **caractérisé en ce que** l'au moins une source de lumière supplémentaire (11, 12a, 12b) est disposée dans le module de phare (2) de manière à tourner autour d'un axe s'étendant perpendiculairement au plan horizontal (7) et/ou autour d'un axe s'étendant perpendiculairement au plan vertical (8).

6. Agencement selon l'une quelconque des revendications précédentes, **caractérisé en ce que**, dans le module de phare (2), sont disposées une pluralité de sources de lumière supplémentaires (11, 12a, 12b) qui peuvent être allumées et éteintes séparément et qui éclairent des zones au moins partiellement différentes dans le champ proche à l'avant du véhicule à moteur.

7. Agencement selon l'une quelconque des revendications précédentes, **caractérisé en ce que** l'au moins une source de lumière principale (3, 4a, 4b, 4c) et/ou **en ce que** l'au moins une source de lumière supplémentaire (11, 12a, 12b) comprend/comprennent respectivement au moins une source de lumière à semi-conducteur, notamment une diode électroluminescente.

8. Agencement selon l'une quelconque des revendications précédentes, **caractérisé en ce que** l'au moins une source de lumière supplémentaire est disposée à l'intérieur d'un réflecteur (5) du module de phare (2) ou fait saillie à l'intérieur du réflecteur (5).

9. Agencement selon l'une quelconque des revendications précédentes, **caractérisé en ce que** l'au moins une source de lumière supplémentaire émet de la lumière pour éclairer au moins partiellement une région située immédiatement à l'avant ou à l'arrière du véhicule à moteur, qui n'éclaire pas ou pas entièrement la distribution de lumière principale.

10. Agencement selon l'une quelconque des revendications précédentes, **caractérisé en ce que** l'au moins une source de lumière supplémentaire émet de la lumière destinée à éclairer une région comprise entre 0,2 m et 2,5 m à l'avant du véhicule à moteur.
